# EUROPÄISCHE PATENTSCHRIFT

(11) **EP 1 538 425 B1**
(45) Veröffentlichungstag und Bekanntmachung des Hinweises auf die Patenterteilung: **28.04.2010**
(21) Anmeldenummer: 04021991.7
(22) Anmeldetag: 16.09.2004
(51) Int. Cl.: G01D 18/00

(54) **Elektronisches Messgerät**
Electronic measuring device
Dispositif de mesure électronique

(30) Priorität: 01.12.2003 DE 10356629
(43) Veröffentlichungstag der Anmeldung: 08.06.2005
(73) Patentinhaber: KROHNE MESSTECHNIK GMBH & CO. KG, 47058 Duisburg (DE)
(72) Erfinder: Wolter, Jürgen, 46145 Oberhausen (DE)
(74) Vertreter: Gesthuysen, von Rohr & Eggert

(56) Entgegenhaltungen:
- EP-A- 1 108 984
- WO-A-03/091738

## Beschreibung

Die Erfindung betrifft ein elektronisches Meßgerät, mit einem Sensor zum Erfassen einer Meßgröße, einem Arbeitsspeicher für Betriebsparameter des Meßgeräts und mehreren weiteren Speicherbereichen für wenigstens einen Teil der Betriebsparameter des Meßgeräts, wobei als weiterer Speicherbereich ein erster Speicherbereich zum Speichern von aktiven Betriebsparametern vorgesehen ist. Die Erfindung betrifft weiterhin ein Verfahren zum Betreiben eines elektronischen Meßgeräts, wobei das Meßgerät einen Sensor zum Erfassen einer Meßgröße, einen Arbeitsspeicher für Betriebsparameter des Meßgeräts und mehrere weitere Speicherbereiche für wenigstens einen Teil der Betriebsparameter des Meßgeräts aufweist und wobei als weiterer Speicherbereich ein erster Speicherbereich vorgesehen ist, in dem aktive Betriebsparameter gespeichert werden. Ein solches elektronisches Meßgerät bzw. ein solches Verfahren zum Betreiben eines elektronischen Meßgeräts sind z. B. aus der DE 101 48 029 bekannt.

Ein kompletter Datensatz eines typischen, industriell eingesetzten elektronischen Meßgeräts besteht aus mehreren Segmenten: Dabei können Kalibierparameter der Elektronik, z. B. für einen analogen Stromausgang und für die Verstärkung einer Elektrodenspannungsmessung, wie bei einem magnetischinduktiven Durchflußmeßgerät, vorgesehen sein. Weiterhin können Kalibrierparameter für den Sensor des Meßgeräts vorgesehen sein. Als Beispiel seien hier Dichtekalibrierwerte für Coriolis-Massendurchflußmeßgeräte genannt. Außerdem können anwenderspezifische Parameter vorgesehen sein, mit denen das Meßgerät auf bestimmte Anwendungen angepaßt wird. Als Beispiele seien hier bestimmte Zeitkonstanten oder die Einheit für die Darstellung einer Meßgröße in einer Anzeigeeinrichtung genannt. Ferner können Fertigungsparameter vorgesehen sein, die z. B. Baugruppen der Elektronik auf ihre spezielle Funktion im jeweiligen Meßgerät hin anpassen, beispielsweise die Adresse eines Moduls für einen geräteinternen Bus. Diese Parameter sind insbesondere auch für Baugruppen gedacht, die mehrere Funktionen aufweisen. Schließlich können Serviceparameter vorgesehen sein, die das Meßgerät über das normale Maß hinaus auf die jeweilige Anwendung hin anpassen. Diese Parameter sind im allgemeinen geschützt, können also nur vom Hersteller, nicht jedoch vom Verwender des Meßgeräts geändert werden.

Der komplette Datensatz eines elektronischen Meßgeräts kann auch in globale Parameter einerseits und lokale Parameter andererseits aufgeteilt werden. Dabei gilt, daß globale Parameter das gesamte Meßgerät und lokale Parameter jeweils immer nur einen begrenzten Bereich des Meßgeräts betreffen. Die lokalen Parameter werden im allgemeinen auf derjenigen Leiterplatte gespeichert, auf der sie benötigt werden. Diese lokalen Parameter werden im allgemeinen auch nicht verändert, wenn ein Meßgerät an eine Anwendung angepaßt wird. Die lokalen Parameter werden also an der Stelle gespeichert, wo sie benötigt werden. Beim Austausch von Leiterplatten oder ganzen Modulen des Meßgeräts werden auf diese Weise die entsprechenden Einstellungen, wie Kalibrierungen, immer erhalten bleiben. So beziehen sich z. B. die Kalibrierparameter des Stromausgangs auf das Analogteil des Meßgeräts und müssen somit gemeinsam ausgetauscht werden.

Während die Kalibrierparameter der Elektronik und die Fertigungsparameter lokale Parameter darstellen, stellen die Kalibrierparameter für den Sensor, anwenderspezifische Parameter und Serviceparameter globale Parameter dar, die das gesamte Meßgerät betreffen. Diese globalen Parameter, mit denen das Meßgerät während seines Betriebs aktiv arbeitet, werden in dem Arbeitsspeicher des Meßgeräts gehalten. Dabei kann der Arbeitsspeicher auch "verteilt" sein, d. h. der Arbeitsspeicher kann aus mehreren Speicherbausteinen bestehen, die im Meßgerät verteilt angeordnet sind. Die globalen Parameter können darüber hinaus, quasi als Sicherheitskopie, in einem oder mehreren weiteren Speicherbereichen abgespeichert sein.

Dazu wird exemplarisch auf die DE 101 48 029 A1 verwiesen, gemäß der vorgesehen ist, daß ein Primärspeicher und ein Sekundärspeicher verwendet werden, aus denen die Parameter für den Arbeitsspeicher geladen werden können. Darüber hinaus ist gemäß der DE 101 48 029 A1 ein Speicher für Standard-Betriebsparameter vorgesehen, aus dem dann Betriebsparameter in den Arbeitsspeicher geladen werden, wenn der Primärspeicher und Sekundärspeicher beide defekt sind.

Das aus der DE 101 48 029 A1 bekannte Verfahren stellt im wesentlichen ein Backup-Verfahren für die Betriebsparameter des elektronischen Meßgeräts dar, im Rahmen dessen bei wenigstens teilweisem Verlust von Betriebsparametern durch Ausfall eines Speicherbereichs der Sekundärspeicher für den Primärspeicher eintritt und umgekehrt, wobei bei vollständigem Verlust der Informationen aus dem Primärspeicher und aus dem Sekundärspeicher aus einem weiteren Speicherbereich Default-Parameter, also Standard-Betriebsparameter, geladen werden.

Aus der EP-A-1 108 984 ist ein programmierbares und rekonfigurierbares Feldgerät mit einem Sensor, einem Feldgerätgehäuse und einer Feldgerätelektronik mit mehreren Speicherbereichen bekannt.

In der WO03/091738 wird ein Konfigurationsverfahren zur Installation eventuell neuer Feldgerät Hardware beschrieben.

Es ist die Aufgabe der Erfindung, ein solches elektronisches Meßgeräts sowie ein solches Verfahren zum Betreiben eines elektronischen Meßgeräts anzugeben, die es einem Verwender ermöglichen, aktiv auf bestimmte Betriebsparameter zuzugreifen, um z. B. eine Reinitialisierung des Meßgeräts zu erzielen.

Ausgehend von dem eingangs beschriebenen elektronischen Meßgerät ist die zuvor hergeleitete und aufgezeigte Aufgabe dadurch gelöst, daß ein zweiter Speicherbereich zum Speichern von Auslieferungs-Betriebsparametern und ein dritter Speicherbereich zum Speichern von anwenderspezifischen Betriebsparametern vorgesehen sind.

Neben dem ersten Speicherbereich zum Speichern von aktiven Betriebsparametern, also solchen Betriebsparametern, die im Arbeitsspeicher abgelegt sind, um den Betrieb des Meßgeräts zu gewährleisten, sind erfindungsgemäß also als weitere Speicherbereiche ein zweiter und ein dritter Speicherbereich vorgesehen. Der zweite Speicherbereich dient dabei zum Speichern von Auslieferungs-Betriebsparametern, also solchen Betriebsparametern, die schon über die Standard-Betriebsparameter hinaus auch alle erforderlichen Kalibrierparameter aufweisen. Der dritte Speicherbereich ist zum Speichern von anwenderspezifischen Betriebsparametern vorgesehen, also solchen Betriebsparametern, die darüber hinaus auf die jeweilige Anwendung des Verwenders des Meßgeräts zugeschnitten sind.

Zu diesen verschiedenen Versionen von Betriebsparametern des Meßgeräts sei erläuternd folgendes ausgeführt: Standard-Betriebsparameter, auch Default-Betriebsparameter genannt, sind solche Betriebsparameter, mit denen grundsätzlich ein Betrieb des Meßgeräts möglich ist, wenn auch ohne Kalibrierung. Aus dem Stand der Technik ist bekannt, solche Standard-Betriebsparameter in dem Meßgerät abzuspeichern, um einen Grundbetrieb des Meßgeräts zu gewährleisten. Gemäß einer bevorzugten Weiterbildung der Erfindung ist zum Speichern von solchen Standard-Betriebsparametern ein vierter Speicherbereich vorgesehen. Wird nun durch einen Betrieb des Meßgeräts mit diesen Standard-Betriebsparametern eine Kalibrierung, z. B. eine Kalibriermessung durchgeführt, so werden Kalibrierwerte erhalten, und es kann eine neue Version von Betriebsparametern, nämlich die Auslieferungs-Betriebsparameter abgespeichert werden, erfindungsgemäß nämlich im zweiten Speicherbereich. Werden die Auslieferungs-Betriebsparameter in den Arbeitsspeicher des Meßgeräts geladen, so kann ein kalibrierter Meßbetrieb durchgeführt werden.

Dieser kalibrierte Meßbetrieb ist im allgemeinen jedoch noch nicht an die spezielle Anwendung eines Verwenders des Meßgeräts angepaßt. Insofern ist die Version der anwenderspezifischen Betriebsparameter von Relevanz, die erfindungsgemäß im dritten Speicherbereich vorgesehen ist. Hier werden bestimmte Parameter durch solche Parameter ersetzt, die der jeweiligen Anwendung des Verwenders entsprechen.

Als Version zur Initialisierung des Meßgeräts bei seiner Inbetriebnahme ist der erste Speicherbereich zum Speichern von aktiven Betriebsparametern vorgesehen. Das heißt, daß das Meßgerät bei Inbetriebnahme die Betriebsparameter aus dem ersten Speicherbereich in den Arbeitsspeicher lädt. Um tatsächlich immer die aktuellen Betriebsparameter zu verwenden, ist gemäß einer bevorzugten Weiterbildung der Erfindung vorgesehen, daß nach einer Veränderung von Betriebsparametern automatisch diese neuen Betriebsparameter in den ersten Speicherbereich kopiert werden, da es sich bei diesen neuen Betriebsparametern ja nun um die aktiven Betriebsparameter handelt.

Zusätzlich oder alternativ dazu kann gemäß einer weiteren bevorzugten Weiterbildung der Erfindung ein fünfter Speicherbereich zum Speichern einer Bearbeitungsversion der Betriebsparameter vorgesehen sein. Konkret heißt das, daß bei der Veränderung von Betriebsparametern diese Veränderungen nicht sofort in den Arbeitsspeicher oder in den ersten Speicherbereich zum Speichern der aktiven Betriebsparameter geschrieben werden, sondern in den fünften Speicherbereich. Erst wenn die Bearbeitung der Betriebsparameter bestätigt wird, also bestätigt wird, daß die bearbeiteten Betriebsparameter nunmehr die aktiven Betriebsparameter sein sollen, erfolgt ein Abspeichern der neuen Betriebsparameter einerseits im Arbeitsspeicher und andererseits, wie zuvor schon ausgeführt, im ersten Speicherbereich, der ja immer eine Kopie der aktiven Betriebsparameter enthalten soll.

Mit dem Vorsehen der zuvor angesprochenen weiteren Speicherbereiche wird der Zweck verfolgt, daß der Verwender des elektronischen Meßgeräts z. B. bei Änderungen seiner Anwendung auf ältere Versionen der Betriebsparameter und damit auf ältere Einstellungen des elektronischen Meßgeräts zurückgreifen kann. Dabei kommt der Version der Auslieferungs-Betriebsparameter eine besondere Bedeutung zu, da hier auch die Kalibrierparameter für den Sensor enthalten sind.

Eine weitere Verwendung finden die von den aktiven Betriebsparametern verschiedenen Versionen von Betriebsparametern z. B. dann, wenn das Meßgerät versehentlich derart verstellt worden ist, daß der Verwender zu keiner funktionsfähigen Einstellung des Meßgeräts mehr zurückfindet. Hier kann dann als Ausgangspunkt für Veränderungen zunächst wieder auf die Version der anwenderspezifischen Betriebsparameter zurückgegangen werden, gegebenenfalls sogar auf die Version der Auslieferungs-Betriebsparameter. Zum Hintergrund sei hier erläutert, daß ein typisches elektronisches Meßgerät häufig mehr als einhundert Betriebsparameter aufweist, so daß insbesondere ein ungeübter Verwender des Meßgeräts bei der Veränderung der Betriebsparameter schnell zu einem Zustand gelangen kann, in dem er den Überblick über die veränderten Betriebsparameter und insbesondere deren Wechselwirkung miteinander verliert.

Im Gegensatz zu den aus dem Stand der Technik bekannten Meßgeräten, insbesondere dem aus der DE 101 48 029 A1 bekannten Meßgerät, liegt der erfindungsgemäß beabsichtigte Zweck nicht in der Backup-Möglichkeit, also in einer Datensicherung und -wiederherstellung im Falle von Datenverlusten, sondern darin, daß der Verwender des Meßgeräts aktiv auf eine bestimmte Version der Betriebsparameter zurückgreifen kann. Dazu ist gemäß einer bevorzugten Weiterbildung der Erfindung insbesondere vorgesehen, daß der Arbeitsspeicher mit, vorzugsweise allen, weiteren Speicherbereichen zur Übertragung von Betriebsparametern verbunden ist. Darüber hinaus ist gemäß einer bevorzugten Weiterbildung der Erfindung vorgesehen, daß die weiteren Speicherbereiche auch untereinander, vorzugsweise vollständig, zur Übertragung von Betriebsparametern miteinander verbunden sind. Auf Einwirkung des Verwenders des elektronischen Meßgeräts ist es damit möglich, Betriebsparameter aus einem der weiteren Speicherbereiche in den Arbeitsspeicher oder in einen anderen der weiteren Speicherbereiche zu übertragen.

Gemäß einer bevorzugten Weiterbildung der Erfindung ist außerdem vorgesehen, daß das Meßgerät ein Elektronikgehäuse und einen Elektronikeinsatz aufweist, wobei der Elektronikeinsatz elektronische Einrichtungen aufweist und in das Elektronikgehäuse entnehmbar eingesetzt ist. Dabei ist gemäß einer bevorzugten Weiterbildung der Erfindung der Arbeitsspeicher im Elektronikeinsatz vorgesehen. Außerdem sind gemäß einer bevorzugten Weiterbildung der Erfindung der erste Speicherbereich zum Speichern von aktiven Betriebsparametern und der zweite Speicherbereich zum Speichern von Auslieferungsbetriebsparametern im Elektronikgehäuse vorgesehen. Ganz besonders bevorzugten sind darüber hinaus der dritte Speicherbereich zum Speichern von anwenderspezifischen Betriebsparametern oder/und der vierte Speicherbereich zum Speichern der Standard-Betriebsparameter oder/und der fünfte Speicherbereich zum Speichern von der Bearbeitungsversion der Betriebsparameter im Elektronikeinsatz vorgesehen. Die damit verbundenen Vorteile und Möglichkeiten erschließen sich insbesondere unter Berücksichtigung des nachfolgend beschriebenen Verfahrens zum Betreiben eines elektronisches Meßgeräts.

Ausgehend von dem eingangs beschriebenen Verfahren zum Betreiben eines elektronischen Meßgeräts ist die weiter oben hergeleitete und aufgezeigte Aufgabe dadurch gelöst, daß ein zweiter Speicherbereich vorgesehen ist, in dem Auslieferungsbetriebsparameter gespeichert werden, und ein dritter Speicherbereich vorgesehen ist, in dem anwenderspezifische Betriebsparameter gespeichert werden.

In Analogie zu dem zuvor beschriebenen elektronischen Meßgerät sind derartige bevorzugte Weiterbildungen der Erfindung vorgesehen, daß ein vierter Speicherbereich bereitgestellt wird, in dem Standard-Betriebsparameter gespeichert werden oder/und ein fünfter Speicherbereich bereitgestellt wird, in dem eine Bearbeitungsversion der Betriebsparameter gespeichert wird.

Weiterhin ist gemäß einer bevorzugten Weiterbildung der Erfindung vorgesehen, daß das Meßgerät ein Elektronikgehäuse, einen elektronische Einrichtungen aufweisenden Elektronikeinsatz, eine Eingabeeinrichtung und eine Ausgabeeinrichtung aufweist, wobei der Arbeitsspeicher im Elektronikeinsatz und die weiteren Speicherbereiche wenigstens teilweise im Elektronikgehäuse vorgesehen sind und nach dem Austausch des Elektronikgehäuses, des Sensors oder/und des Elektronikeinsatzes gegen ein neues Elektronikgehäuse, einen neuen Sensor bzw. einen neuen Elektronikeinsatz bei der erstmaligen Inbetriebnahme des Meßgeräts über die Ausgabeeinrichtung automatisch eine Abfrage erfolgt, ob das Elektronikgehäuse, der Sensor oder/und der Elektronikeinsatz ausgetauscht worden ist.

Eine solche Abfrage kann insofern vorteilhaft sein, als daß gemäß einer bevorzugten Weiterbildung daraufhin vorgesehen sein kann, daß auf eine über die Eingabeeinrichtung erfolgte Eingabe hin, daß das Elektronikgehäuse, der Sensor oder/und der Elektronikeinsatz ausgetauscht worden ist, automatisch entschieden wird, ob die im Arbeitsspeicher abgespeicherten Betriebsparameter verändert werden. Eine solche Veränderung der im Arbeitsspeicher abgespeicherten Betriebsparameter kann nämlich deswegen erforderlich oder zumindest vorteilhaft sein, als daß das neue Elektronikgehäuse, der neue Sensor oder/und der neue Elektronikeinsatz zumindest teilweise neue oder gegenüber den aktiven Betriebsparametern zumindest verschiedene Betriebsparameter erfordern.

Gemäß einer bevorzugten Weiterbildung der Erfindung ist insbesondere vorgesehen, daß auf die Eingabe hin, daß das Elektronikgehäuse ausgetauscht worden ist, keine automatische Veränderung der im Arbeitsspeicher abgespeicherten Betriebsparameter erfolgt. Dies ist insbesondere dann sinnvoll, wenn die im Arbeitsspeicher abgespeicherten Betriebsparameter keine Funktionen des Elektronikgehäuses betreffen, was seinerseits insbesondere dann realisiert sein kann, wenn alle maßgeblichen elektronischen Einrichtungen Bestandteile des Elektronikeinsatzes sind.

Ferner ist gemäß einer bevorzugten Weiterbildung der Erfindung vorgesehen, daß der zweite Speicherbereich zum Speichern von Auslieferungs-Betriebsparametern im Elektronikgehäuse vorgesehen ist und auf eine Eingabe hin, daß der Sensor und das Elektronikgehäuse ausgetauscht worden sind, die im zweiten Speicherbereich abgespeicherten Auslieferungs-Betriebsparameter automatisch, vorzugsweise vollständig, in den Arbeitsspeicher kopiert werden. Auf diese Weise können der oder die Kalibrierparameter für den Sensor aus der Version der Auslieferungs-Betriebsparameter für den neuen Sensor übernommen werden. Die bisher im Arbeitsspeicher befindlichen Parameter werden also durch die aus dem zweiten Speicherbereich übernommenen Auslieferungs-Betriebsparameter überschrieben.

Schließlich ist gemäß einer bevorzugten Weiterbildung der Erfindung vorgesehen, daß der erste Speicherbereich zum Speichern von aktiven Betriebsparametern im Elektronikgehäuse vorgesehen ist und auf eine Eingabe hin, daß der Elektronikeinsatz ausgetauscht worden ist, die im ersten Speicherbereich abgespeicherten aktiven Betriebsparameter automatisch, vorzugsweise vollständig, in den Arbeitsspeicher kopiert werden.

Um schließlich im ersten Speicherbereich immer über eine Kopie der aktiven Betriebsparameter zu verfügen, ist gemäß einer bevorzugten Weiterbildung der Erfindung vorgesehen, die nunmehr im Arbeitsspeicher abgespeicherten Betriebsparameter automatisch, vorzugsweise vollständig, in den ersten Speicherbereich zu kopieren.

Im einzelnen gibt es nun eine Vielzahl von Möglichkeiten, das erfindungsgemäße elektronische Meßgerät sowie das erfindungsgemäße Verfahren zum Betreiben eines elektronischen Meßgeräts auszugestalten und weiterzubilden. Dazu wird auf die den unabhängigen Patentansprüchen nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: schematisch ein elektronisches Meßgerät gemäß einem bevorzugten Ausführungsbeispiel der Erfindung und
- Fig. 2: schematisch den Verfahrensablauf zur Veränderung der im Arbeitsspeicher abgespeicherten Betriebsparameter nach dem Austausch eines Bauteils des elektronischen Meßgeräts.

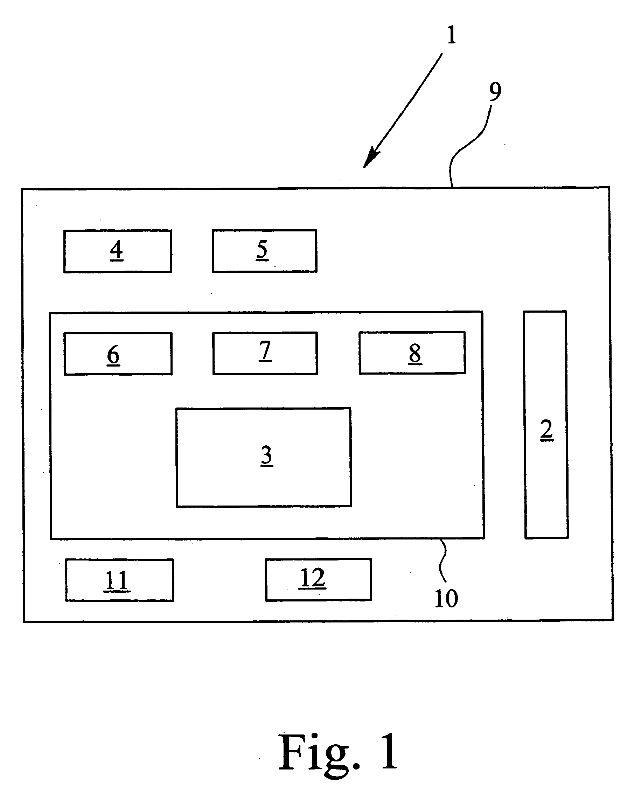

Wie aus Fig. 1 ersichtlich, weist das elektronische Meßgerät 1 gemäß dem vorliegend beschriebenen bevorzugten Ausführungsbeispiel der Erfindung einen Sensor 2 zum Erfassen einer Meßgröße, einen Arbeitsspeicher 3 für Betriebsparameter des Meßgeräts und weitere Speicherbereiche 4, 5, 6, 7, 8, insbesondere für globale Parameter auf. Als weiterer Speicherbereich ist unter anderem ein erster Speicherbereich 4 zum Speichern der aktiven Betriebsparameter vorgesehen. Im ersten Speicherbereich befindet sich also eine Kopie der Betriebsparameter, die im Arbeitsspeicher 3 gehalten werden, um den Meßbetrieb des Meßgeräts 1 zu gewährleisten.

Als zusätzlicher Speicherbereich ist weiterhin ein zweiter Speicherbereich 5 zum Speichern von Auslieferungs-Betriebsparametern vorgesehen. In der Version der Auslieferungs-Betriebsparameter befinden sich auch die Kalibrierparameter für den Sensor 3. Als weiterer Speicherbereich ist außerdem ein dritter Speicherbereich 6 zum Speichern von anwenderspezifischen Betriebsparametern vorgesehen. Anwenderspezifische Betriebsparameter weisen für die jeweilige Anwendung des Verwenders des Meßgeräts 1 spezifische Größen auf. Schließlich sind als weitere Speicherbereiche ein vierter Speicherbereich 7 und ein fünfter Speicherbereich 8 vorgesehen, wobei der vierte Speicherbereich 7 zum Speichern von Standard-Betriebsparametern, die einen Grundbetrieb des Meßgeräts 1 gewährleisten sollen, und der fünfte Speicherbereich 8 zum Speichern einer Bearbeitungsversion der Betriebsparametern vorgesehen ist.

Das Speichern einer Bearbeitungsversion der Betriebsparameter bedeutet, daß bei der Veränderung der im Arbeitsspeicher 3 gehaltenen Betriebsparameter diese Änderungen nicht sofort in den Arbeitsspeicher 3 oder in den ersten Speicherbereich 4, der eine Kopie der im Arbeitsspeicher 3 gehaltenen Betriebsparameter enthält, geschrieben werden, sondern vorerst in den fünften Speicherbereich 8. Erst nach Bestätigung, daß die Änderungen der Betriebsparameter tatsächlich übernommen werden sollen, werden die geänderten Betriebsparameter in den Arbeitsspeicher 3 übernommen, in dem die Bearbeitungsversion der Betriebsparameter aus dem fünften Speicherbereich 8 in den Arbeitsspeicherbereich kopiert werden.

Zur Übertragung von Betriebsparametern zwischen dem Arbeitsspeicher 3 und den einzelnen weiteren Speicherbereichen 4, 5, 6, 7, 8 sind der Arbeitsspeicher 3 und alle weiteren Speicherbereiche 4, 5, 6, 7, 8 miteinander verbunden, was der Übersichtlichkeit halber in Fig. 1 im einzelnen nicht dargestellt ist.

Das elektronische Meßgerät gemäß dem vorliegend beschriebenen bevorzugten Ausführungsbeispiel der Erfindung weist ein Elektronikgehäuse 9 und einen Elektronikeinsatz 10 auf. Dabei ist der Elektronikeinsatz 10 in das Elektronikgehäuse 9 einsetzbar und aus diesem wieder entnehmbar. Der Elektronikeinsatz 10 ist mit einer Mehrzahl von in Fig. 1 nicht weiter dargestellten elektronischen Einrichtungen versehen, nämlich mit allen elektronischen Einrichtungen, die für den Betrieb des elektronischen Meßgeräts 1 gemäß dem vorliegend beschriebenen bevorzugten Ausführungsbeispiel der Erfindung erforderlich sind. Die Aufgabe des Elektronikgehäuses 9 ist es, den Elektronikeinsatz 10 mit seinen elektronischen Einrichtungen aufzunehmen und nach außen hin zu schützen. Darüber hinaus nimmt das Elektronikgehäuse 9 eine Eingabeeinrichtung 11 und eine Ausgabeeinrichtung 12 auf. Diese haben nachfolgend beschriebene Funktionen:

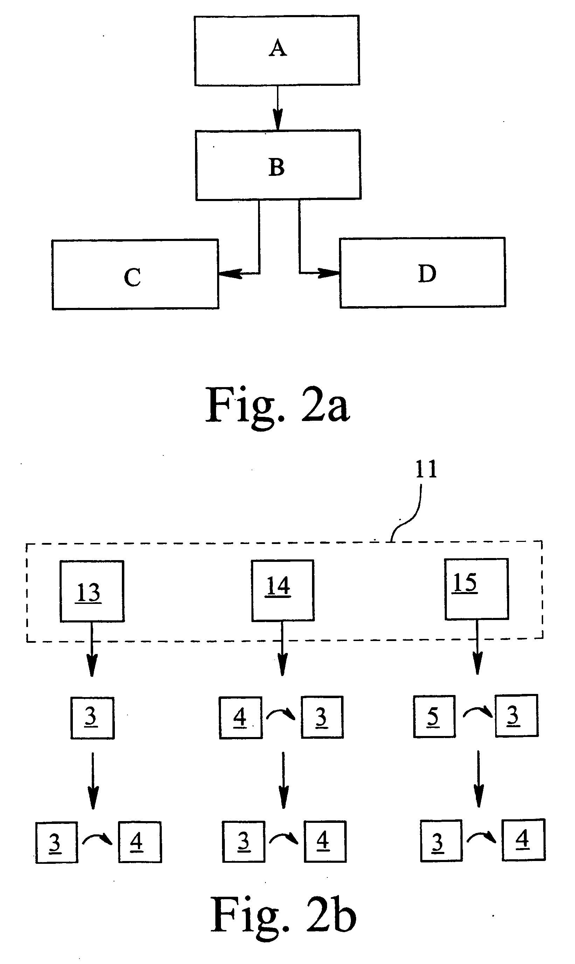

Wie in Fig. 2a dargestellt, erfolgt nach dem Einschalten (Schritt A) des elektronischen Meßgeräts 1 gemäß dem vorliegend beschriebenen bevorzugten Ausführungsbeispiel der Erfindung eine Abfrage der Seriennummern des Sensors 2, des Elektronikgehäuses 9 und des Elektronikeinsatzes 10 (Schritt B). Entsprechen die erfaßten Seriennummern den bisherigen Seriennummern, so ist kein Austausch eines der Bauteile erfolgt, und es kann zum normalen Meßbetrieb gewechselt werden (Schritt C). Wird jedoch festgestellt, daß wenigstens eine der Seriennummern des Sensors 2, des Elektronikgehäuses 9 oder/und des Elektronikeinsatzes 10 nicht der bisherigen Seriennummer entspricht, so wird dem Verwender des elektronischen Meßgeräts 1 die Möglichkeit gegeben, über die Eingabeeinrichtung 11 bestimmte Eingaben zum machen, wie in Fig. 2b dargestellt. Eine entsprechende Aufforderung zur Eingabe erfolgt über die Ausgabeeinrichtung 12.

Wie in Fig. 2b im einzelnen dargestellt, wird der Verwender des elektronischen Meßgeräts über die Ausgabeeinrichtung 12 aufgefordert, eine von drei vorgegebenen Tasten 13, 14, 15 der Eingabeeinrichtung 11 zu bedienen. Dabei lautet die über die Ausgabeeinrichtung 12 an den Verwender des elektronischen Meßgeräts ausgegebene Aufforderung, die erste Taste 13 zu bedienen, wenn das Elektronikgehäuse 9 ausgetauscht worden ist, die zweite Taste 14 zu bedienen, wenn der Elektronikeinsatz 10 ausgetauscht worden ist, und die dritte Taste 15 zu bedienen, wenn der Sensor 2 zusammen mit dem Elektronikgehäuse 9 ausgetauscht worden ist.

Auf die Eingabe des Verwenders des elektronischen Meßgeräts hin wird bei der Bedienung der ersten Taste 13 keine automatische Veränderung der im Arbeitsspeicher 3 abgespeicherten Betriebsparameter veranlaßt. Das heißt, daß die im Arbeitsspeicher 3 abgespeicherten Betriebsparameter unverändert bleiben. Bei Bedienung der zweiten Taste 14 werden die im ersten Speicherbereich 4 abgespeicherten aktiven Betriebsparameter automatisch vollständig in den Arbeitsspeicher 3 kopiert. Bei der Bedienung der dritten Taste 15 schließlich werden die im zweiten Speicherbereich 5 abgespeicherten Auslieferungs-Betriebsparameter einschließlich der Kalibrierungsparameter für den Sensor 2 automatisch vollständig in den Arbeitsspeicher 3 kopiert.

Schließlich werden danach in jedem Fall die Betriebsparameter aus dem Arbeitsspeicher 3 in den ersten Speicherbereich 4 kopiert, um in jedem Fall sicherzustellen, daß der erste Speicherbereich 4 immer eine aktuelle Kopie der im Arbeitsspeicher 3 befindlichen und für den aktuellen Meßbetrieb des elektronischen Meßgeräts 1 eingesetzten Betriebsparameter vorhanden ist. Daß eine entsprechende Version der Betriebsparameter im ersten Speicherbereich 4 teilweise schon vorhanden sein kann und dabei überschrieben wird, ist unproblematisch und wird dabei in Kauf genommen.

## Patentansprüche

1. Verfahren zum Betreiben eines elektronischen Meßgeräts (1), wobei das Meßgerät (1) einen Sensor (2) zum Erfassen einer Meßgröße, einen Arbeitsspeicher (3) für Betriebsparameter des Meßgeräts (1) und mehrere weitere Speicherbereiche (4, 5, 6) für wenigstens einen Teil der Betriebsparameter des Meßgeräts (1) aufweist, als ein weiterer Speicherbereich ein erster Speicherbereich (4) vorgesehen ist, in dem als aktive Betriebsparameter eine Kopie der im Arbeitsspeicher (3) gehaltenen Betriebsparameter gespeichert ist, als ein weiterer Speicherbereich ein zweiter Speicherbereich (5) vorgesehen ist, in dem Auslieferungs-Betriebsparameter gespeichert werden, und als ein weiterer Speicherbereich ein dritter Speicherbereich (6) vorgesehen ist, in dem anwenderspezifische Betriebsparameter gespeichert werden, das Meßgerät (1) ein Elektronikgehäuse (9), einen elektronische Einrichtungen aufweisenden Elektronikeinsatz (10), eine Eingabeeinrichtung (11) und eine Ausgabeeinrichtung (12) aufweist, der Arbeitsspeicher (3) im Elektronikeinsatz (10) der erste Speicherbereich (4) zum Speichern von aktiven Betriebsparametern im Elektronikgehäuse (9) und die anderen weiteren Speicherbereiche (5, 6) wenigstens teilweise im Elektronikgehäuse (9) vorgesehen sind, nach dem Austausch des Elektronikgehäuses (9), des Sensors (2) oder/und des Elektronikeinsatzes (10) gegen ein neues Elektronikgehäuse (9), einen neuen Sensor (2) bzw. einen neuen Elektronikeinsatz (10) bei der erstmaligen Inbetriebnahme des Meßgeräts (1) über die Ausgabeeinrichtung (12) automatisch eine Abfrage erfolgt, ob das Elektronikgehäuse (9), der Sensor (2) oder/und der Elektronikeinsatz (10) ausgetauscht worden ist, und auf eine Eingabe hin, daß der Elektronikeinsatz (10) ausgetauscht worden ist, die im ersten Speicherbereich (4) abgespeicherten aktiven Betriebsparameter automatisch in den Arbeitsspeicher (3) kopiert werden.

2. Verfahren nach Anspruch 1, **dadurch gekennzeichnet, daß** als ein weiterer Speicherbereich ein vierter Speicherbereich (7) vorgesehen ist, in dem als Default-Parameter Standard-Betriebsparameter gespeichert werden.

3. Verfahren nach Anspruch 1 oder 2, **dadurch gekennzeichnet, daß** auf die Eingabe hin, daß das Elektronikgehäuse (9) ausgetauscht worden ist, keine automatische Veränderung der im Arbeitsspeicher (3) abgespeicherten Betriebsparameter erfolgt.

4. Verfahren nach Anspruch 1 oder 2, **dadurch gekennzeichnet, daß** der zweite Speicherbereich (5) zum Speichern von Auslieferungs-Betriebsparametern im Elektronikgehäuse (9) vorgesehen ist, wobei die Auslieferungs-Betriebsparameter über die Standard-Betriebsparameter hinaus alle Kalibrierparameter aufweisen, und auf eine Eingabe hin, daß der Sensor (2) und das Elektronikgehäuse (9) ausgetauscht worden sind, die im zweiten Speicherbereich (5) abgespeicherten Auslieferungs-Betriebsparameter automatisch, vorzugsweise vollständig, in den Arbeitsspeicher (3) kopiert werden.

5. Verfahren nach einem der Ansprüche 1 bis 4, **dadurch gekennzeichnet, daß** die nunmehr im Arbeitsspeicher (3) abgespeicherten Betriebsparameter automatisch in den ersten Speicherbereich (4) kopiert werden.

## Claims

1. Method for operating an electronic measuring instrument (1), wherein the measuring instrument (1) incorporates a sensor (2) for the acquisition of a process variable, a main memory (3) for storing operating parameters of the measuring instrument (1) as well as several additional memory blocks (4, 5, 6) for at least part of the operating parameters of the measurement instrument (1), a first memory block (4) is provided as an additional memory block, in which a copy of the operating parameter kept in the main memory (3) is saved as the active operating parameter, a second memory block (5) is provided as an additional memory block, in which the delivered, preset operating parameters are stored, and a third memory block (6) is provided as an additional memory block, in which the application-specific operating parameters are stored, the measuring instrument (1) encompasses an electronic enclosure (9), an electronic module (10) incorporating electronic devices, an input device (11) and an output device (12), the main memory (3) in the electronic module (10), the first memory block (4) for storing active operating parameters in the electronics enclosure (9) and the other additional memory blocks (5, 6) are provided at least partially in the electronics enclosure (9), upon first initialization of the measuring instrument (1) after the electronics enclosure (9), the sensor (2) and/or the electronic module have been exchanged for a new electronics enclosure (9), a new sensor (2) and/or a new electronic module (10), the output device (12) automatically queries whether the electronics enclosure (9), sensor (2) and/or electronic module (10) have been exchanged and in response to an entry made that the electronic module (10) has been exchanged, the active operating parameters stored in the first memory block (4) are automatically copied to the main memory (3).

2. Method according to claim 1, **characterized in that** a fourth memory block (7) is provided as an additional memory block, in which standard operating parameters as default parameters are stored.

3. Method according to claim 1 or 2, **characterized in that** in response to an entry made that the electronics enclosure (9) has been exchanged, no active modification of the operating parameters stored in the main memory (3) takes place.

4. Method according to claim 1 or 2, **characterized in that** the second memory block (5) is provided for storing delivered, pre-set operating parameters in the electronics enclosure (9), wherein the delivered, pre-set operating parameters include beyond the standard operating parameters all calibration parameters and, in response to the entry made that the sensor (2) and the electronics enclosure (9) have been exchanged, the delivery, pre-set operating parameters stored in the second memory block (5) are automatically and, preferably, completely copied into the main memory (3).

5. Method according to any one of claims 1 to 4, **characterized in that** the operating parameters now stored in the main memory (3) are automatically and, preferably, completely copied into the first memory block.

## Revendications

1. Procédé d'utilisation d'un appareil de mesure électronique (1), l'appareil de mesure (1) présentant un capteur (2) pour acquérir une grandeur mesurée, une mémoire de travail (3) pour les paramètres de fonctionnement de l'appareil de mesure (1) et plusieurs autres zones de mémoire (4, 5, 6) pour au moins une partie des paramètres de fonctionnement de l'appareil de mesure (1), une première zone de mémoire (4) étant prévue comme zone de mémoire supplémentaire dans laquelle est enregistrée en tant que paramètres de fonctionnement actifs une copie des paramètres de fonctionnement qui sont conservés dans la mémoire de travail (3), une deuxième zone de mémoire (5) étant prévue comme zone de mémoire supplémentaire dans laquelle sont enregistrés les paramètres de fonctionnement à la livraison et une troisième zone de mémoire (6) étant prévue comme zone de mémoire supplémentaire dans laquelle sont enregistrés les paramètres de fonctionnement spécifiques à l'utilisateur, l'appareil de mesure (1) présentant un boîtier électronique (9), un insert électronique (10) qui présente des dispositifs électroniques, un dispositif de saisie (11) et un dispositif de sortie (12), la mémoire de travail (3) étant prévue dans l'insert électronique (10), la première zone de mémoire (4) destinée à enregistrer les paramètres de fonctionnement actifs étant prévue dans le boîtier électronique (9) et les autres zones de mémoire supplémentaires (5, 6) étant prévues au moins partiellement dans le boîtier électronique (9), après le remplacement du boîtier électronique (9), du capteur (2) et/ou de l'insert électronique (10) par un nouveau boîtier électronique (9), un nouveau capteur (2) ou un nouvel insert électronique (10), une interrogation ayant automatiquement lieu par le biais du dispositif de sortie (12) lors de la première mise en service de l'appareil de mesure (1), afin de définir si le boîtier électronique (9), le capteur (2) et/ou l'insert électronique (10) ont été remplacés et, lors d'une saisie confirmant que l'insert électronique (10) a été remplacé, les paramètres de fonctionnement actifs enregistrées dans la première zone de mémoire (4) étant automatiquement copiés dans la mémoire de travail (3).

2. Procédé selon la revendication 1, **caractérisé en ce qu'**une quatrième zone de mémoire (7) est prévue comme zone de mémoire supplémentaire dans laquelle sont enregistrés des paramètres de fonctionnement standard en tant que paramètres par défaut.

3. Procédé selon la revendication 1 ou 2, **caractérisé en ce que** la saisie confirmant le remplacement du boîtier électronique (9) ne donne lieu à aucune modification automatique des paramètres de fonctionnement enregistrés dans la mémoire de travail (3).

4. Procédé selon la revendication 1 ou 2, **caractérisé en ce que** la deuxième zone de mémoire (5) destinée à enregistrer les paramètres de fonctionnement à la livraison est prévue dans le boîtier électronique (9), les paramètres de fonctionnement à la livraison présentant, en plus des paramètres de fonctionnement standard, tous les paramètres de calibrage et, lors d'une saisie confirmant que le capteur (2) et le boîtier électronique (9) ont été remplacés, les paramètres de fonctionnement à la livraison enregistrées dans la deuxième zone de mémoire (5) sont automatiquement copiés, de préférence intégralement, dans la mémoire de travail (3).

5. Procédé selon l'une des revendications 1 à 4, **caractérisé en ce que** les paramètres de fonctionnement à présent enregistrés dans la mémoire de travail (3) sont copiés automatiquement dans la première zone de mémoire (4).
